# EUROPÄISCHE PATENTSCHRIFT

(11) **EP 0 840 860 B1**
(45) Veröffentlichungstag und Bekanntmachung des Hinweises auf die Patenterteilung: **09.06.1999**
(21) Anmeldenummer: 96923820.3
(22) Anmeldetag: 09.07.1996
(51) Int. Cl.: F16C 13/00, F16C 32/06

(54) **WALZE ODER STÜTZELEMENT FÜR EINE WALZE**
ROLLER OR SUPPORTING ELEMENT FOR A ROLLER
CYLINDRE OU ELEMENT DE SUPPORT D'UN CYLINDRE

(30) Priorität: 26.07.1995 DE 19527225
(43) Veröffentlichungstag der Anmeldung: 13.05.1998
(73) Patentinhaber: Eduard Küsters Maschinenfabrik GmbH & Co. KG, 47805 Krefeld (DE)
(72) Erfinder: KÜSTERS, Karl-Heinz, D-47804 Krefeld (DE)
(74) Vertreter: Palgen, Peter, Dipl.-Phys. Dr.
(86) Internationale Anmeldenummer: DE9601235
(87) Internationale Veröffentlichungsnummer: WO9705399

(56) Entgegenhaltungen:
- EP-A- 0 452 633
- EP-A- 0 536 501
- DE-A- 2 230 139
- DE-A- 3 011 669
- DE-A- 3 126 492
- DE-A- 4 011 365
- DE-U- 9 314 568
- FR-A- 2 297 683
- GB-A- 2 072 800

## Beschreibung

Die Erfindung bezieht sich auf eine Walze gemäß dem Oberbegriff des Anspruchs 1.

Eine derartige Walze ist aus der EP-A-0 452 633 bekannt. Über eine besonders dichte Aufeinanderfolge der einzelnen Stützelemente ist nichts ausgesagt. Die Stützelemente besitzen jeweils eine eigentliche kraftausübende Haupt-Lagertasche, die symmetrisch zur Achse der Kolben/Zylindereinheit des Stützelements angeordnet ist. Als "Stabilisierlagertaschen" sind Lagertaschen mit wesentlich kleinerem Querschnitt als die Haupt-Lagertasche gemeint, die außerhalb derselben angeordnet sind und über Drosselbohrungen mit Druckflüssigkeit versorgt werden. Wenn eine solche Stabilisierlagertasche vom Innenumfang der Hohlwalze etwas abhebt, bricht wegen der Drosselung der hydrostatische Druck in dieser Lagertasche sogleich zusammen. Dadurch werden der Rand der Lagertasche und damit das Stützelement an dieser Stelle wieder näher an den Innenumfang der Hohlwalze herankommen, wodurch der Abströmquerschnitt verringert wird und der Druck wieder steigt. Es stellt sich schließlich ein Gleichgewicht ein, bei dem die Stabilisierlagertasche in einem bestimmten Abstand vom Innenumfang der Hohlwalze gehalten wird. Bei vier derartigen Stabilisierlagertaschen werden das ganze Stützelement und damit auch die Haupt-Lagertasche stets in der richtigen Lage zum Innenumfang der Hohlwalze gehalten.

Die Haupt-Lagertasche hat bei der bekannten Ausführungsform einen kreisrunden Querschnitt, dessen Durchmesser nur wenig kleiner als die Erstreckung des Stützelements in Längsrichtung der Walze ist. Da die Hohlwalze aus einem Stahl- oder Gußrohr besteht, ist der Querschnitt der Lagertasche bei der bekannten Ausführungsform kein Problem.

Bei Versuchen mit Hohlwalzen, die zum Zwecke einer besonders guten Anpassung an eine Gegenwalze aus besonders nachgiebigem Material, insbesondere aus faserverstärktem Kunststoff bestanden, wurde jedoch festgestellt, daß bei größeren Linienkräften die Bahn die Tendenz hat, die Hohlwalze ein wenig einzubeulen und in die Lagertasche hineinzudrücken. Auch wenn diese Einbeulung nur gering sein mag, führt sie zu einer Kantenpressung an den in Umfangsrichtung gelegenen Stegen und damit zu einer erhöhten Reibung an den Kanten der Stege und entsprechendem Verschleiß.

Der Erfindung liegt die Aufgabe zugrunde, das Einbeulen der Hohlwalze in die Lagertasche hinein und die damit einhergehenden Folgen zu vermindern.

Diese Aufgabe wird durch die in Anspruch 1 wiedergegebene Erfindung gelöst.

Die Lagertasche wird also bei einer Hohlwalze aus nachgiebigem Material in Umfangsrichtung wesentlich schmäler gemacht als in Längsrichtung der Walze. Hierdurch werden die freie Tragweite der Hohlwalze in Umfangsrichtung zwischen den Längsstegen der Lagertasche und die Neigung zum Einbeulen verringert.

Die Länge der Lagertasche in Längsrichtung der Walze stimmt mit der Erstreckung des Stützelements in dieser Richtung überein, damit die Zonen der Druckausübung durch die Lagertaschen mit möglichst geringer Unterbrechung längs der Walze aufeinanderfolgen (z.B. an sich aus der DE-A-3 011 669 bekannt). Die Lagertaschen sind ferner rechteckig begrenzt und haben in Längsrichtung der Walze eine mindestens zweimal so große Ausdehnung wie in Umfangsrichtung, was indessen für sich genommen aus der GB-A-2 072 800 bekannt ist.

Der Gedanke, bei einer Hohlwalze aus nachgiebigem Material wie zum Beispiel faserverstärktem Kunststoff, die Stützelemente in Längsrichtung der Walze unmittelbar aufeinanderfolgen zu lassen, geht für sich genommen aus dem DE-GM 93 14 568 hervor. Das Problem des Einbeulens des Walzenmantels und des Eindrückens in die Lagertasche ist jedoch in dem DE-GM 93 14 568 nicht erwähnt und nicht gelöst, denn die dortigen Stützelemente entsprechen der üblichen Art mit relativ großer Erstreckung der Lagertaschen in Umfangsrichtung.

Die Stabilisierlagertaschen können gemäß Anspruch 2 im Grundriß kreisrund sein und einen höchstens der Erstreckung der eigentlichen Lagertasche in Umfangsrichtung entsprechenden Durchmesser aufweisen.

In der Zeichnung sind zwei Ausführungsbeispiele der Erfindung dargestellt.
Fig. 1 zeigt eine Ansicht einer erfindungsgemäßen Walze im Zusammenwirken mit einer Gegenwalze, teilweise im Schnitt;
Fig. 2 zeigt einen Querschnitt nach der Linie II-II in Fig. 1 in etwas vergrößertem Maßstab;
Fig. 3 zeigt einen zur Achse der Walze senkrechten Teilschnitt etwa entsprechend dem in Fig. 2 strichpunktierten und mit III bezeichneten Ausschnitt;
Fig. 4 zeigt eine Ansicht auf das Stützelement gemäß Fig. 3 von oben.

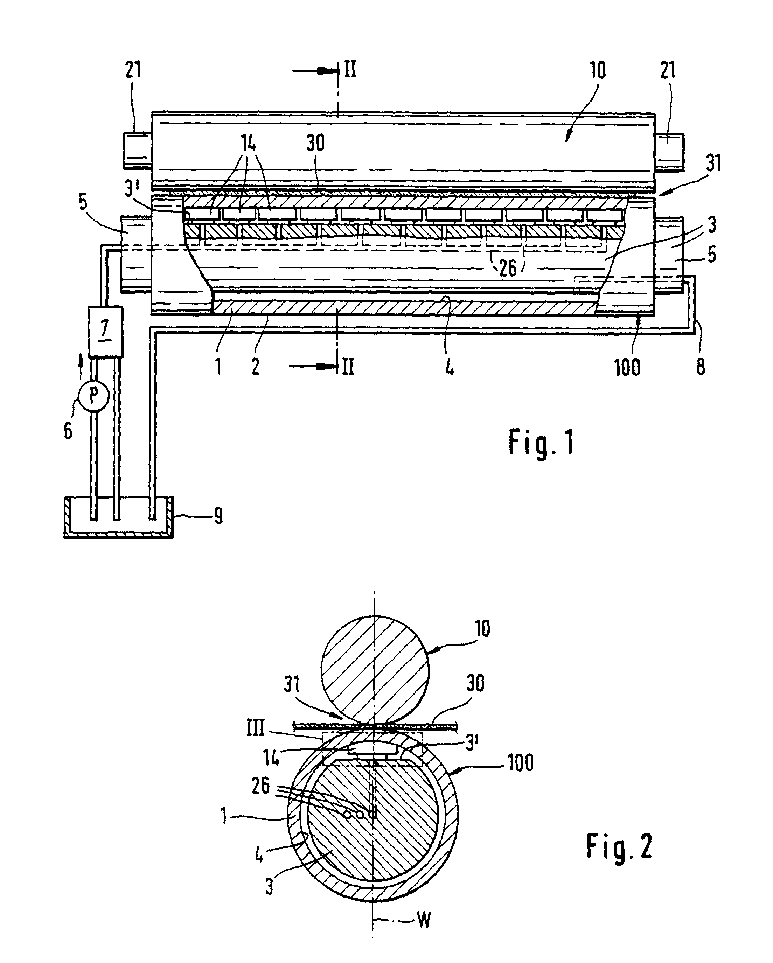

Die in den Fig. 1 und 2 dargestellte Walzenanordnung umfaßt eine Oberwalze 10 und eine Unterwalze 100, zwischen denen eine Warenbahn 30 einer Druckbehandlung in dem Walzspalt 31 ausgesetzt wird. Die Oberwalze 10 ist eine konventionelle Walze. Die Unterwalze 100 hingegen umfaßt eine umlaufende Hohlwalze 1, deren Außenumfang 2 den arbeitenden Walzenumfang bildet und die der Länge nach von einem undrehbaren Querhaupt 3 durchgriffen ist, welches allseitig Abstand zum Innenumfang 4 der Hohlwalze 1 beläßt, so daß es sich innerhalb der Hohlwalze 1 durchbiegen kann, ohne mit dem Innenumfang 4 in Berührung zu kommen.

Die Zapfen 21 der Oberwalze 10 sowie die aus der Hohlwalze 1 an den Enden hervorstehenden Enden 5 des Querhauptes 3 sind in einem nicht dargestellten Walzenständer montiert oder auch beweglich gelagert und durch geeignete Belastungsvorrichtungen gegeneinandergedrückt.

Die Hohlwalze 1 kann an ihren Enden auf dem Querhaupt 3 durch in den Fig. 1 und 2 nicht dargestellte Lager drehbar gelagert sein. Bei einem alternativen Ausführungsbeispiel ist die Hohlwalze 1 an dem Querhaupt 3 in der Wirkebene W, d.h. in Fig. 1 in der parallel zur Zeichenebene gelegenen Verbindungsebene der Achsen der beiden Walzen 10 und 100, verschiebbar geführt und kann sich als Ganzes gegenüber dem Querhaupt 3 in einem gewissen Bereich verlagern. In diesem Fall des sogenannten inneren Hubs kann das Querhaupt 3 mit seinen Enden in einem Walzenständer fest montiert sein.

An der abgeflachten Oberseite 3' des Querhaupts 3, d.h. also auf der dem Walzspalt 31 zugewandten Seite, sind in Längsrichtung der Walze 100 hintereinander Stützelemente 14 vorgesehen, die über eine Leitungsanordnung 26 von einer Pumpe 6 und einer Steuereinrichtung 7 mit Druckflüssigkeit versehen werden können. Die Druckflüssigkeit preßt die Stützelemente 14 an den Innenumfang 4 der Hohlwalze 1 an und drückt diese zur Bildung der Linienkraft gegen den Walzspalt 31. Die Druckflüssigkeit tritt über innere Kanäle auf die Anlageseite der Stützelemente 14 über, wo sich hydrostatische Lagertaschen befinden, die von einem umlaufenden Rand umgeben sind, über den die Druckflüssigkeit abströmt, so daß ein tragfähiger Flüssigkeitsfilm gegeben ist, auf welchem die Hohlwalze 1 mit ihrem Innenumfang 4 beim Umlauf gleitet. Die an den Stützelementen 14 übertretende Flüssigkeit sammelt sich in dem Zwischenraum zwischen dem Querhaupt und dem Innenumfang 4 der Hohlwalze 1 und wird über die Leitung 8 abgezogen und in den Vorratsbehälter 9 zurückgeführt.

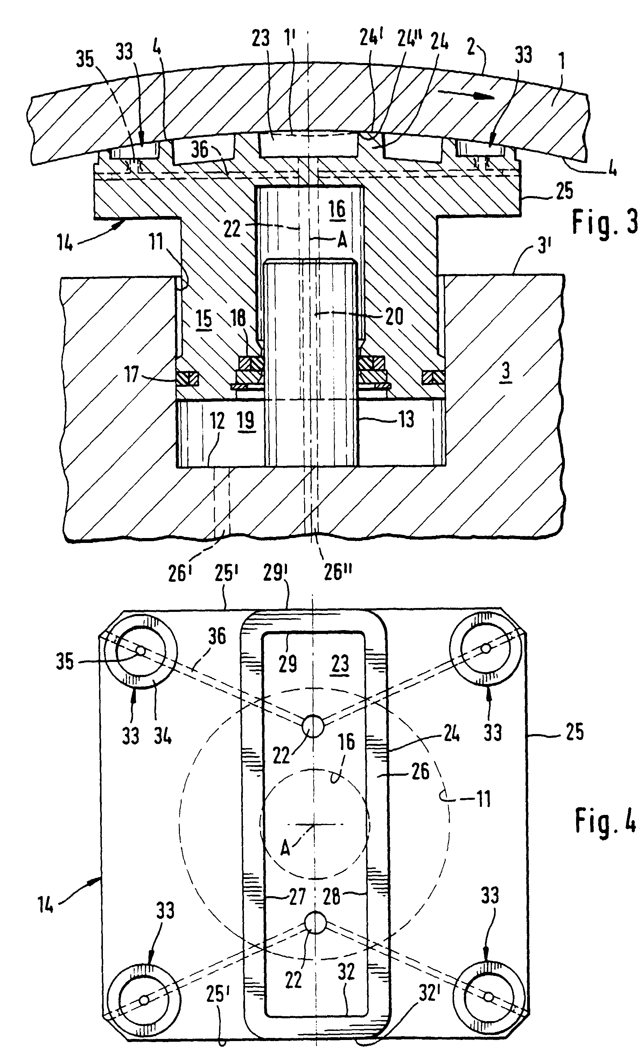

Die Leitung 26 ist in Fig. 1 nur schematisch als einzelne Leitung dargestellt. Zur Steuerung der in dem Walzspalt 31 herrschenden Linienkraft können aber tatsächlich die einzelnen Stützelemente 14 individuell mit Druckflüssigkeit beaufschlagt werden. Zumindest aber erfolgt eine gruppenweise separate Beaufschlagung, beispielsweise der mittleren Gruppe und der beiden Randgruppen. Dies ist in Fig. 2 durch das Vorhandensein dreier Leitungen 26 angedeutet. Außerdem führt nicht nur zu jedem einzelnen Stützelement oder zu jeder Gruppe von Stützelementen eine eigenen Leitungsanordnung 26, sondern es besteht auch die zu einem einzelnen Stützelement führenden Leitungsanordnung 26 in Wirklichkeit aus zwei einzelnen Leitungen 26' und 26" wie aus der Fig. 3 deutlich wird.

In der abgeflachten Oberseite 3' des Querhaupts 3 ist für jedes Stützelement 14 eine Zylindersackbohrung 11 vorgesehen, deren Achse A zur Walze 100 radial verläuft und auf deren Boden 12 eine kolbenartiges zylindrisches zur Achse A koaxiales Teil 13 angebracht ist. In die Zylinderbohrung 11 greift von oben ein kolbenartiger zylindrischer Teil 15 des Stützelements 14 ein, der mit der Zylinderbohrung 11 eine Kolben/Zylindereinheit bildet. Der Teil 15 des Stützelements 14 besitzt eine innere geschlossene zylindrische, zur Achse A koaxiale Druckkammer 16, in die das kolbenartige Teil 13 eingreift. Dichtungen 17,18 dichten das Teil 15 gegen den Innenumfang der Zylinderbohrung 11 bzw. gegen den Außenumfang des kolbenartigen Teils 13 ab.

Unter dem Teil 15 des Stützelements 14 ist eine Zylinderkammer 19 gebildet, die über eine Zuleitung 26' im Querhaupt 3 mit Druckflüssigkeit versorgt wird.

Das kolbenartige Teil 13 besitzt eine innere Durchgangsbohrung 20, die an eine Leitung 26" im Querhaupt 3 angeschlossen ist und über die die Druckkammer 16 unabhängig von der Zylinderkammer 19 mit Druckflüssigkeit beaufschlagt werden kann.

Das Stützelement 14 besitzt einen seitlich ausladendes Kopfteil 25 von etwa quadratischem Grundriß, wie aus Fig. 4 zu erkennen ist. Auf dem Kopfteil 25 ist eine rechteckige Lagertasche 23 durch einen umlaufenden Steg 24 gebildet, dessen dem Innenumfang 4 der Hohlwalze 1 zugewandte Stirnfläche 24' die Anlagefläche des Stützelements 14 an dem Innenumfang 4 darstellt. Die Lagertasche 23 ist, wie in dem zur Achse A senkrechten Grundriß der Fig. 4 erkennbar ist, zu der Achse A symmetrisch angeordnet. Die längeren Seiten 27,28 der Lagertasche 23 verlaufen in Längsrichtung der Walze und sind mindestens zweimal, vorzugsweise mindestens dreimal und in dem Ausführungsbeispiel etwa viermal so lang wie die in Umfangsrichtung verlaufenden Seiten 29,32. Die in Längsrichtung der Walze gelegenen äußeren Begrenzungen 29',32' des umlaufenden Steges 24 schließen mit den dortigen Begrenzungen 25' des Kopfteils 25 ab.

Die Tiefe der Lagertasche 23 bzw. die Höhe des umlaufenden Steges 24 betragen 5 bis 10 mm. Die Ausdehnung des Kopfteils 25 des Stützelements 14 in Längsrichtung der Walze 100 beträgt im allgemeinen 150 bis 300 mm. Die einzelnen Stützelemente folgen in Längsrichtung der Walze 100 dicht aufeinander, so daß sich die Kopfteile 25 gerade noch nicht berühren.

Die Lagertasche 23 ist also relativ schmal, so daß sich eine nachgiebige Hohlwalze 1 beim Umlauf der Hohlwalze 1 in Pfeilrichtung nicht in der bei 1' strichpunktiert stark übertrieben angedeuteten Weise in die Lagertasche 23 hineinbeulen kann, was an der Stelle 24" zu einer erhöhten Kantenpressung mit unerwünschten Verschieißerscheinungen führen würde.

Die Lagertasche 23 wird über das Stützelement 14 achsparallel durchsetzende Durchgangsbohrungen 22 aus der Zylinderkammer 19 mit Druckflüssigkeit versorgt, die ständig über die Stirnfläche 24' des Steges 24 nach außen abströmt und dort einen tragfähigen Flüssigkeitsfilm bildet, der eine metallische Berührung der Stirnfläche 24' und des Innenumfangs 4 der Hohlwalze 1 verhindert.

Damit der die Lagertasche 23 umgrenzende Steg 24 mit seiner Stirnfläche 24' stets in einer gleichmäßigen Anlage an dem Innenumfang 4 der Hohlwalze 1 gehalten wird, sind in den Ecken des im wesentlichen quadratischen Kopfteils 25 außerhalb der Lagertasche 23 Stabilisierlagertaschen 33 vorgesehen, die einen kreisförmigen Grundriß haben aber wesentlich kleiner als die Lagertaschen 23 sind. Ihr Durchmesser ist geringer als die Erstreckung der Lagertasche 23 in Umfangsrichtung.

Auch die Stabilisierlagertaschen sind durch einen umlaufenden Steg 34 gebildet und werden über eine Drosselbohrung 35 mit Druckflüssigkeit versorgt, die über Zweigleitungen 36 an die Durchbohrungen 22 angeschlossen sind. Die Stabilisierlagertaschen 33 sorgen dafür, daß sich das Stützelement 14 gegenüber dem Innenumfang 4 der Hohlwalze 1 nicht verkanten kann.

## Patentansprüche

1. Walze (100)
mit einer umlaufenden, den arbeitenden Walzenumfang (2) bildenden Hohlwalze (1),
mit einem undrehbaren, die Hohlwalze (1) der Länge nach durchgreifenden, ringsum Abstand zum Innenumfang (4) der Hohlwalze (1) belassenden Querhaupt (3),
mit in einer Reihe längs des Querhaupts (3) an dem Querhaupt (3) angebrachten, unter der Wirkung einer hydraulischen Kolben/Zylindereinheit (11,15) gegen den Innenumfang (4) der Hohlwalze (1) drückbaren Stützelementen (14) mit einem etwa quadratischen Kopfteil (25), welches in der der Hohlwalze (1) zugewandten Anlagefläche eine hydrostatische Lagertasche (23) aufweist, über deren Rand die Druckflüssigkeit unter Bildung eines tragfähigen Druckflüssigkeitsfilms abströmt,
und mit in den vier Ecken des Kopfteils (25) angeordneten Stabilisierlagertaschen (33), die über Drosselbohrungen (35) mit Druckflüssigkeit versorgbar sind,
**dadurch gekennzeichnet**,
daß die Hohlwalze (1) aus einem nachgiebigen Material besteht,
daß die Lagertasche (23) rechteckig begrenzt und symmetrisch zur Achse (A) der Kolben/Zylindereinheit (11,15) angeordnet ist und die längeren Rechteckseiten (27,28) sich längs der Walze (100) erstrecken,
daß die an den in Längsrichtung gelegenen Enden der Lagertasche (23) die Lagertasche (23) abschließenden Stege (29,32) mit ihren äußeren Begrenzungen (29',32') t an der in Längsrichtung äußeren Begrenzung (25') des Stützelements (14) gelegen sind,
daß die Lagertasche (23) längs der Walze (100) eine mindestens zweimal so große Ausdehnung hat wie in Umfangsrichtung
und daß die Stützelemente (14) längs des Querhaupts (3) dicht aufeinanderfolgen, so daß die Kopfteile (25) sich gerade noch nicht berühren.

2. Walze nach Anspruch 1, **dadurch gekennzeichnet**, daß die Stabilisierlagertaschen (33) im Grundriß kreisrund sind und einen höchstens der Erstreckung der Lagertasche (23) in Umfangsrichtung entsprechenden Durchmesser aufweisen.

## Claims

1. A roll (100)
comprising a rotating shell (1) constituting the working roll periphery (2),
a non-rotatable crosshead (3) which extends longitudinally through the shell (1) and leaves an annular space between it and the inner periphery (4) of the shell (1),
supporting elements (14) disposed in a row along and on the crosshead (3) and adapted to be pressed under the action of a hydraulic piston/cylinder unit (11, 15) against the inner periphery (4) of the shell (1) and having a substantially square head part (25) which has a hydrostatic bearing pocket (23) in the abutment surface facing the shell (1), pressure fluid flowing over the edge of the bearing pocket and forming a load-bearing film and
stabilising bearing pockets (13) disposed at the four corners of the head part (25) and adapted to be supplied with pressure fluid via throttle bores (35),
characterised in that
the shell (1) is made of a flexible material,
in that the bearing pocket (23) is rectangular and disposed symmetrically with the axis (A) of the piston/cylinder unit (11, 15) and the longer sides of the rectangle (27, 28) extend along the roll (100),
in that the outer boundaries (29', 32') of the webs (29, 32) terminating the bearing pocket (23) at the longitudinal ends of the bearing pocket (23) adjoin the longitudinal outer boundary (25') of the supporting element (14),
in that the bearing pocket (23) extends along the roll (100) at least twice as far as in the peripheral direction and
in that the supporting elements (14) follow one another closely along the crosshead (3), so that the head parts (25) almost touch one another.

2. A roll according to claim 1, characterised in that the stabilising bearing pockets (33) have a circular cross-section and a diameter not greater than the length of the bearing pocket (23) in the peripheral direction.

## Revendications

1. Cylindre (100) dans lequel :
• un cylindre creux (1) tournant constitue, par sa périphérie, la surface de travail (2),
• une traverse, non rotative, (4) passe à travers le cylindre creux (1) dans le sens de la longueur en laissant un intervalle par rapport à sa périphérie interne (4) du cylindre creux (1),
• une série d'éléments de soutien (14) sont montés sur l'entretoise (3) en ligne longitudinale et peuvent être mis en pression sur la surface interne (4) du cylindre creux (1) par l'action d'une unité hydraulique à cylindre et piston (11, 15),
• chaque élément (14) présente une pièce de tête sensiblement carrée (25) comportant sur sa face d'appui en regard du cylindre creux (1) une poche (23) formant palier hydrostatique et sur le bord de laquelle s'écoule le liquide sous pression en formant un film porteur,
• aux quatre coins de la pièce de tête (25) se trouvent des poches (33) formant paliers de stabilisation pouvant être alimentés en fluide sous pression par des alésages d'étranglement (35),
caractérisé en ce que
• le cylindre creux (1) est constitué par un matériau flexible,
• la poche (23) formant palier est rectangulaire et symétrique par rapport à l'axe (A) de l'unité hydraulique à cylindre et piston (11, 15), ses longs côtés (27, 28) étant orientés selon la direction longitudinale du cylindre (100),
• les barrettes (29, 32) fermant les extrémités en direction longitudinale de la poche (23) formant palier, ont leurs bords externes (29', 32') situés à la limite externe (25'), dans le sens longitudinal, de l'élément de soutien (14),
• la poche (23) formant palier est deux fois plus longue selon la direction longitudinale du cylindre (100) que selon la direction périphérique,
• les éléments de soutien (14) se succèdent le long de l'entretoise (3) en étant serrés de sorte que les pièces de tête (25) ne se touchent pas encore.

2. Cylindre selon la revendication 1,
caractérisé en ce que
les poches (33) formant paliers de stabilisation présentent, en plan, une section circulaire dont le diamètre est au plus égal à la dimension transversale de la poche (23) formant palier en direction périphérique.
